# EUROPEAN PATENT SPECIFICATION

(11) **EP 2 482 640 B1**
(45) Date of publication and mention of the grant of the patent: **01.07.2015**
(21) Application number: 10763412.3
(22) Date of filing: 28.09.2010
(51) Int. Cl.: A01J 7/04

(54) **TEAT APPLICATION DEVICE**
ZITZENANLEGEVORRICHTUNG
DISPOSITIF D'APPLICATION POUR TRAYON

(30) Priority: 28.09.2009 GB 0916945
(43) Date of publication of application: 08.08.2012
(73) Proprietor: Ambic Equipment Limited, Witney, Oxfordshire OX28 4YF (GB)
(72) Inventor: HILEY, Richard, James, Chinor Oxfordshire OX39 4JS (GB)
(74) Representative: Bingham, Ian Mark
(86) International application number: PCT/GB2010/051622
(87) International publication number: WO 2011/036501

(56) References cited:
- WO-A2-02/091946
- AT-B- 377 678
- US-A- 3 921 860
- US-A1- 2009 084 324

## Description

### FIELD OF THE INVENTION

The present invention relates to an application device for treating the teats of milk producing animals with a liquid. Typical milk producing animals that can be treated in this way are cows, sheep, buffalo and goats.

### BACKGROUND OF THE INVENTION

In order to maintain the health and welfare of milk producing animals, as well as the quality of their milk, it is very important that their udders and teats are kept clean and healthy. In particular, the bacteria that cause mastitis infections must not be allowed to proliferate and contaminate the milk harvesting equipment, thus risking the transfer of pathogens from animal to animal. To guard against this problem it is well known to treat the teats of animals with a liquid, such as a liquid disinfectant or a washing solution, either immediately before and/or immediately after milking. In the case of a pre-milking treatment application the aim is primarily to remove foreign matter and kill the bacteria present on the outside of the teat before milking. In the case of a post-milking treatment, it has been found beneficial to apply a sanitising solution and in some instances also a barrier liquid to provide a protective film that remains on the teat for some time and that seals and protects the teat end from mastitis causing bacteria. To ensure that such treatments are effective at controlling the bacteria, it is crucial that each teat is entirely coated with the liquid, and this requires the dairyman to maintain a high level of skill whilst operating the treatment process; unfortunately, for some methods of treatment this becomes arduous, especially in cases where the animal herd size is large.

In the prior art, spray bottles using a simple pump and trigger have been employed, as have more sophisticated systems such as those using vacuum operated automated spray devices, pumped or pressurised spray delivery systems and back-pack spray type devices using a piston-type squeeze gun. In the latter two cases, the operator can vary the amount of liquid being applied and manually direct it to the udder and its depending teats. It is also known to treat teats with a liquid by dipping them into a rigid cup, commonly known as a "dip cup", filled with the treatment liquid.

The term "dip cup" as used herein shall refer to the cup-shaped component of the application device that, in use, contains an amount of treatment liquid into which a teat is dipped.

Commercially known dip cups, are made in one of two forms. Either they are made as a one-part component, for example machined from a single block of material or injection moulded as a single component, or they are made as a two-or more part component, for example having an inner cup shaped portion that is surrounded by an outer casing. The present invention encompasses both forms of dip cup, and because of this, the term "cup portion" as used herein, refers to the single-part component as a whole, as well as to the inner cup-shaped portion of the two-or more part component.

The dip cup method involves the use of an application device having a dip cup which is (in the case of the single-part component) or has (in the case of a two-or more part component) a cup portion with an open top end that extends along a body to a closed bottom end, that is partially filled with treatment liquid supplied from a reservoir source. This reservoir source may be remote from the dip cup, in which case the application device typically comprises a handheld wand or lance, one end of which is connected directly or indirectly to the dip cup. The treatment liquid is typically conveyed from the remote source through one or more fluid flow tubes associated with the wand or lance and into the cup portion. Alternatively, the reservoir source may be a rigid container that is connected either directly or indirectly to the closed bottom end of the cup portion; again the treatment liquid is conveyed from the rigid container into the cup portion via one or more fluid flow tubes. In both cases the liquid may be urged from the reservoir source using for example a vacuum-operated pump, a peristaltic pump, a stirrup pump or using compressed air. Any of the pumps used with the application device may be manually or electrically operated. Further alternatively, a flexible squeeze container that is connected directly or indirectly to the closed bottom end of the cup portion may provide the reservoir source. In this latter case, when treatment liquid is required in the cup portion, the flexible squeeze container is manually, or otherwise, squeezed and a supply of the treatment liquid is conveyed along one or more fluid flow tubes to an outlet located within the cup portion. In the later versions of this arrangement, commonly called the "non-return dip cup", the outlet is often located above the desired level of treatment liquid so that air (and not treatment liquid) is then sucked back along the fluid flow tube(s) when the squeeze on the reservoir container is released.

To operate the dip cup method, the dairy farmer simply needs to introduce an appropriate quantity of treatment liquid into the cup portion of the dip cup using one of the above techniques and then position the filled dip cup under an animal's teat, raise the dip cup up to submerge the teat in the treatment liquid contained within the cup portion, then lower the dip cup and remove it from under the teat. This operation may be repeated on as many teats as required and the amount of treatment liquid may be replenished to maintain the appropriate quantity in the cup portion of the dip cup.

As would be expected, when the teat is submerged, a portion of the treatment liquid is displaced, causing the level of liquid to rise within the cup portion. Clearly, if too much treatment liquid is used, it will be displaced so that it overflows out of the open top end of the dip cup. However, it is important that the level of liquid is sufficient to enable the whole of the teat to be submerged in the treatment liquid. Thus it is known to provide a dip cup whose cup portion has a full circumferential extension of a portion of its body adjacent to the open top end, to form wider ring-shaped portion towards the open top end of the cup portion. This wider ring effectively acts as an overflow area into which teat treatment liquid is displaced when the animal's teat enters the dip cup. If the cup portion is overfilled, and more chemical is dispensed than is required, the surplus chemical moves up into this wider ring area and the dip cup is prevented from overflowing.

Some treatment liquids, especially those used pre-milking, have a viscosity close to that of water. This has the advantage that they are easily pumped along the fluid flow tube(s) from the reservoir source into the cup portion, but this low viscosity also causes a problem because the speed of delivery is often too fast and this causes the treatment liquid to splash out of the open top end of the dip cup before it has a chance to run down into the cup portion. A splash-guard such as that described in EP0 869 748 provides a partial solution to this problem but this also creates further difficulties in terms of ease of cleaning, manufacture and use, and the fact that the arrangement described increases the overall depth of the dip cup which means the teat has to be inserted a long way down into the cup portion of the dip cup before it comes into contact with fluid.

As described above, dip cups typically comprise one or more fluid flow tubes for conveying the treatment liquid from the reservoir source into the cup portion. Generally such tubes are made of a plastic material such as PVC because this can be readily extruded into the desired tube shape. Unfortunately however, the chemicals in the usual treatment liquids tend to cause PVC to harden and crack, and the operator must periodically replace the tubes to avoid failure of the application device. This type of fluid flow tube also suffers from the disadvantage that it has a fairly narrow bore diameter which not only makes blockage a likely problem but also means that it is difficult to clean. Another problem with the narrow bore fluid flow tubes is that when a viscous treatment liquid such as a barrier liquid, used for post milking is used, more effort or work is needed to urge it from the reservoir source along the fluid flow tube and into the cup portion. This is particularly an issue when a hand operable flexible squeeze container is used as the reservoir source. Moreover, it is quite obvious that the rate at which viscous treatment liquids are able to fill the cup portion is slow and this has a direct effect on the efficiency of the dip cup method. To overcome these difficulties, it is possible to purchase an application device with two or more fluid flow tubes in parallel, but this, of course, only multiplies the failure rate due to cracking, blocking and difficulties with cleaning as noted above. Yet another problem with the fluid flow tube(s) currently in use is that they are a separate component from the rest of the body of the dip cup. This means that the tube(s) need to be fitted into the application device in a separate assembly step from the injection-moulding step used to make the cup portion. Clearly, the manufacturing process could be streamlined if this separate assembly step could be removed from the process.

It is highly desirable, therefore, to make improvements in the design of dip cup application devices, for example, to facilitate a fast fill rate into the cup portion for all viscosities of treatment liquid, thereby to maximise the efficiency of the dip cup method for both pre and post-milking operations. Further, it is desirable provide a device that reduces splashing when the cup portion is being filled and also a device which obviates the need for a PVC fluid flow tube, which is particularly useful for more viscous treatment liquids. A still further desirable improvement would be to provide a fluid flow tube which is very easy to clean and where the complete cup portion can be made by a single injection-moulding. These and other problems are solved by the present invention.

### SUMMARY OF THE INVENTION

The present invention concerns an application device for treating the teats of animals with a liquid. The device comprises a cup portion and, when the device is ready for use, a supply of treatment liquid. The supply of treatment liquid may be achieved using any known means for example, as described above using a remote reservoir source or a reservoir source provided by a rigid or flexible container or bottle connected directly or indirectly for example using a screw or bayonet or any other suitable connector with the cup portion.

A device according to the preamble of claim 1 is known from US 2009/084324.

The present invention therefore provides an application device for treating the teats of animals with a liquid, the device comprising i) a cup portion having internal and external surfaces, an upper open first end capable of receiving an animal teat and a lower closed second end; ii) a fluid supply conduit having an outlet through which the liquid is conveyed into the cup portion; characterised in that the cross-sectional area of the outlet is greater than the horizontal cross-sectional area of the fluid supply conduit.

Ensuring that the cross-sectional area of the outlet is greater than the horizontal cross-sectional area of the fluid supply conduit not only enables the treatment liquid to be dispensed into the cup portion at a faster rate, it also prevents the build up of back pressure within the fluid supply conduit. This back pressure has the tendency to cause the treatment liquid to spurt in an uncontrolled jet from the outlet and be likely to shoot out of the upper open first end of the cup portion. Thus the provision of an outlet with a cross-sectional area greater than the horizontal cross-sectional area of the fluid supply conduit is a key feature for improving the speed and efficiency that the cup portion can be replenished, and this benefit is obtained for a wide range of viscosities of treatment liquid, for example treatment liquids that range from non-viscous to substantially thicker than water and/or thixotropic.

As described above, there are a number of problems associated with the use of separate fluid flow tubes in the application devices currently available. In a preferred embodiment, the present invention overcomes all of these by taking the above application device and modifying it such that it comprises a fluid supply conduit that is defined at least in part by a portion of the external surface of the cup portion. Preferably, an outlet in the fluid supply conduit is located within the cup portion and towards the upper open first end of the cup portion, and it is through this outlet that the treatment liquid is dispensed into the cup portion. The outlet of the fluid supply conduit of this embodiment will of course have a cross-sectional area greater than the horizontal cross-sectional area of the fluid supply conduit. It is particularly desirable that the outlet directs the treatment liquid outwards away from the centre of the cup portion, i.e. the outlet directs the treatment liquid towards the internal surface of the cup portion. Several significant advantages can be realised by having a fluid supply conduit that is defined at least in part by a portion of the external surface of the cup portion. Firstly, the fluid supply conduit is made of the same material as the rest of the cup portion therefore there is not the problem that it is made of PVC or any other material that is liable to hardening and cracking. Secondly, being defined at least in part by the external surface of the cup portion, the fluid supply conduit is easily injection-moulded with the cup portion as a single component; that is, there is no need for a separate assembly step to position a fluid flow tube within the application device. Thirdly, and very importantly, there is much less restriction on the cross-section of the bore of the fluid supply conduit; it can be made much larger than is currently the case for conventional fluid flow tubes. This contributes to making it easier to ensure a speedy delivery of the more viscous barrier-type treatment liquids into the cup portion.

A typical rate of fill for treatment liquids is in the range 2 to 5 seconds.

The increased size of the cross-sectional area of the outlet relative to the cross-sectional area of the fluid supply conduit can be achieved in a number of different ways. For example, the fluid supply conduit can funnel or flare out at the outlet. In a preferred embodiment the outlet may be formed by cutting the end of the fluid supply conduit at an angle to the longitudinal axis of the fluid supply conduit. The shape of the outlet in this case would be determined by the internal profile of the fluid supply conduit, and where the fluid supply conduit is formed at least in part by the external surface of the cup portion, the outlet shape may be further determined by the overall profile of the cup portion. In a further preferred embodiment, the shape of the outlet is that of a half ellipse and this results in its cross-sectional area being over 60% more than the horizontal cross-sectional area of the fluid supply conduit.

The problem of the treatment liquid splashing out of the open top end of the cup portion before it has a chance to flow down into the body of the cup portion, can be further addressed by optionally providing the application device of the present invention with a baffle device adjacent the outlet in the fluid supply conduit, this baffle device is adapted to deflect the liquid as it exits the outlet in the fluid supply conduit either clockwise and/or counterclockwise around the internal surface of the cup portion.

The baffle device is preferably provided as part of the internal surface of the cup portion and it is particularly preferred if this baffle feature is formed by moulding it, for example by injection-moulding, on the internal surface of the cup portion at the same time as the rest of the cup portion is made. The baffle device is most advantageously provided adjacent to the outlet and preferably directly opposite the outlet. Further preferably the baffle device is shaped, for example as a flat barrier wall, which may be curved or 'v'-shaped or profiled in some other way such that it is adapted to deflect the treatment liquid as it exits the outlet in the fluid supply conduit to prevent it from splashing out of the upper open top end of the cup portion. Still further preferably the baffle is adapted to direct the treatment liquid that exits the outlet around the internal surface of the cup portion so as to dissipate it as quickly as possible. This provides further optional additional means to facilitate efficient and speedy fill of the cup portion.

Although parallel-sided, non-tapering cup portions may be used, it is highly preferred that the sides of the cup portion taper inwards towards the lower closed second end as this assists to direct the teat being dipped into the treatment liquid. It is also advantageous if the cup portion has a full circumferential extension of the portion of its body at or near to its upper open first end, to form a wider ring-shaped portion at or near the upper open first end of the cup portion. Preferably, such a cup portion with a full circumferential extension is used in combination with a baffle device of the present invention. Using an application device of the present invention with an optional baffle device, the treatment liquid is directed to run both clockwise and counter clockwise around the ring-shaped portion. This not only promotes efficient and speedy filling of the cup portion without any splashing out of the upper open first end but also ensures the treatment liquid washes and disinfects the inside of the cup portion thereby reducing bacterial contamination.

In a preferred application device of the present invention a reservoir source is provided from which teat treatment liquid is supplied. A container connected either directly or indirectly to the lower closed second end of the cup portion can provide the reservoir source, or alternatively the reservoir source can be provided remotely from the cup portion and the teat treatment liquid can be supplied via a hand-held lance. In the latter case, the hand-held lance is connected to an end of the fluid supply conduit remote from the outlet therein. In a particularly preferred embodiment of the present invention, the longitudinal axis of the container or the lance (depending on which form of reservoir source is being used) is aligned such that it runs substantially parallel with the longitudinal axis of the cup portion. Further preferably, the longitudinal axis of the container or lance is substantially aligned with the longitudinal axis of the external surface of the cup portion that defines the fluid supply conduit. In the latter case, and where the cup portion is also tapered inwards towards its lower closed second end, the device is slightly angled in a way that allows an ergonomic swinging motion of the hand to present the cup portion of the application device to the animal's teats.

To further ensure that treatment liquid does not splash out of the upper open first end of the cup portion, the application device of the present invention may further optionally be provided with a splash guard. The splash guard is conveniently positioned on the rim of the upper open first end of the cup portion, and comprises a flat cover portion which when in position on the cup portion, overhangs and projects radially inwards of the rim to partially close the upper open first end of the cup portion. The upper open first end is not closed too much however, and is still able to receive the animal teat when the treatment device is in use. For maximum anti-splashing benefit it is particularly advantageous if the cover portion overhangs the rim i.e. it extends towards the middle of the upper open first end and is sufficient to overhang the outlet. However, it is not necessary for the cover portion to extend this much all the way around the rim; for example the cover portion may extend and overhang one or more sections only of the rim. In the case where the cover portion only extends to overhang the outlet, the cup portion may be "D" shaped in plan when looking straight down on the cup portion from above. Optionally, where two of more outlets are present, the cover portion will not be restricted to a single extended overhang portion. If the cover portion does not sufficiently overhang the outlet then problems may occur with the cover portion itself providing an edge that will direct the treatment liquid in an uncontrolled manner out of the open first end of the cup portion. As an additional protection against splashing, the rim of the cup portion may be thickened in one or more places. Preferably, the overall height of the application device of the present invention where a remote reservoir source is used, is substantially equal to the height of a conventional application device that uses a rigid or flexible container as a reservoir source. This makes it easy for the operator to position the application device under the animal's teats.

The application device of the present invention preferably has a hook or similar means to enable it to be hung up in some way, so that the operator can put the application device down, for example, so that he can have both hands free perform another task, but still have the device within easy reach. In the preferred arrangement where the longitudinal axis of the cup portion is substantially aligned in the same direction as the longitudinal axis of the container or lance, the hook or similar means is advantageously positioned close to the upper open first end of the cup portion and on the exterior surface thereof. In this way, the application device can be maintained in an up-right orientation to prevent treatment liquid from spilling out of the upper open end of the cup portion. This provides a particular benefit over many of the prior art dip cups, as it is necessary to ensure that these are empty before attempting to hang them up, otherwise spillage may occur.

The present invention also provides the advantage that contaminated or otherwise unwanted liquid can easily be removed from the cup portion, without the need for dismantling the application device first. To achieve this, the application device of the present invention is simply turned over to orient the cup portion upside down and the unwanted liquid is tipped out of the upper open first end of the cup portion.

In a further preferred embodiment, the present invention provides an application device includes a flow regulator comprising for example a valve of some kind, for controlling the rate at which treatment liquid is delivered into the cup portion. The flow regulator is adjustable between a fully open position, a series of incrementally increased closed positions and a fully closed position, to permit, progressively slow and stop, respectively, the flow of the liquid. When a remote reservoir source is in use, the valve is preferably moveable between its various positions using a manually operable lever or screw associated for example with the handle on the lance. Alternatively, the flow regulator comprises a venturi-type restriction introduced between the container or lance (depending upon whether a container or a remote reservoir source is being used) and the lower closed second end of the cup portion. Further alternatively the pressure may be controlled by a stand-alone regulator or any such regulation devices known in the art.

### BRIEF DESCRIPTION OF THE DRAWINGS

Figure 1 is a side perspective view of a cup portion used in an application device
according to the present invention.
Figure 2 is a cross-section view along A-A of the cup portion shown in Figure 1.
Figure 3 is a side elevation view of the of the cup portion shown in Figure 2.
Figure 4 is a cross-section view along B-B of the cup portion shown in Figure 1.
Figure 5 is perspective view looking down from above of the cup portion shown in
Figure 1.

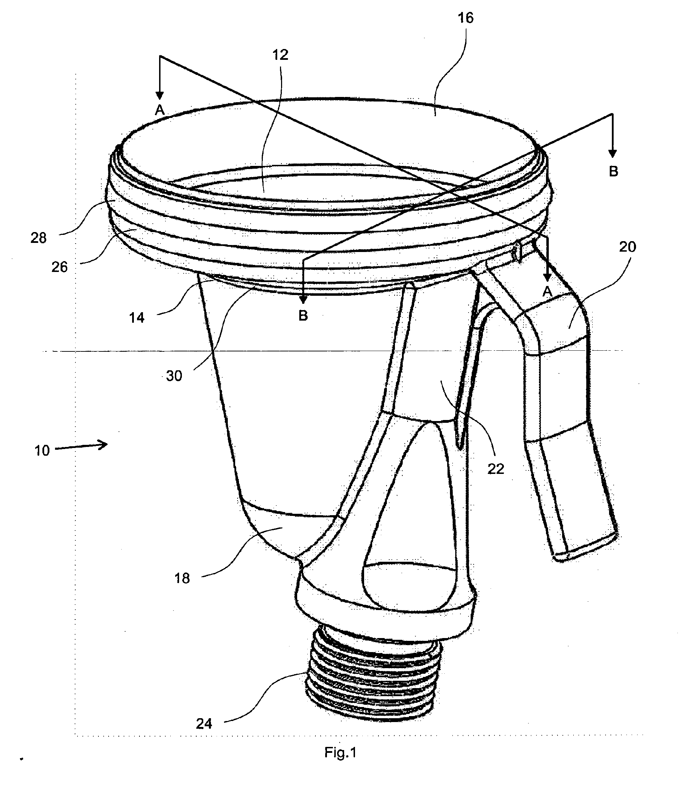

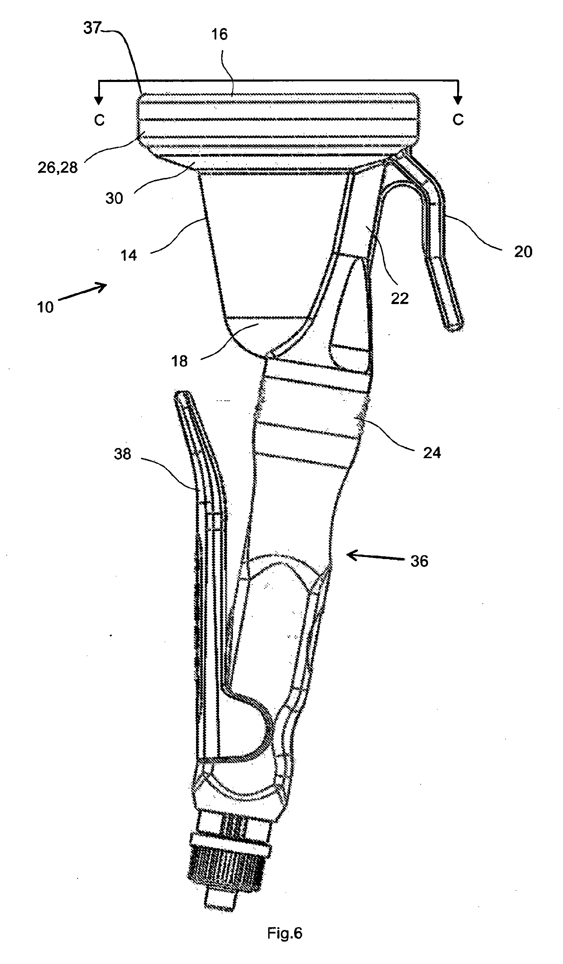

Figure 6 is a side elevation view of a cup portion used in an application device according to the present invention as shown in Figure 1, connected to a lance and with a splash guard fitted to the rim of the upper open end of the cup portion.

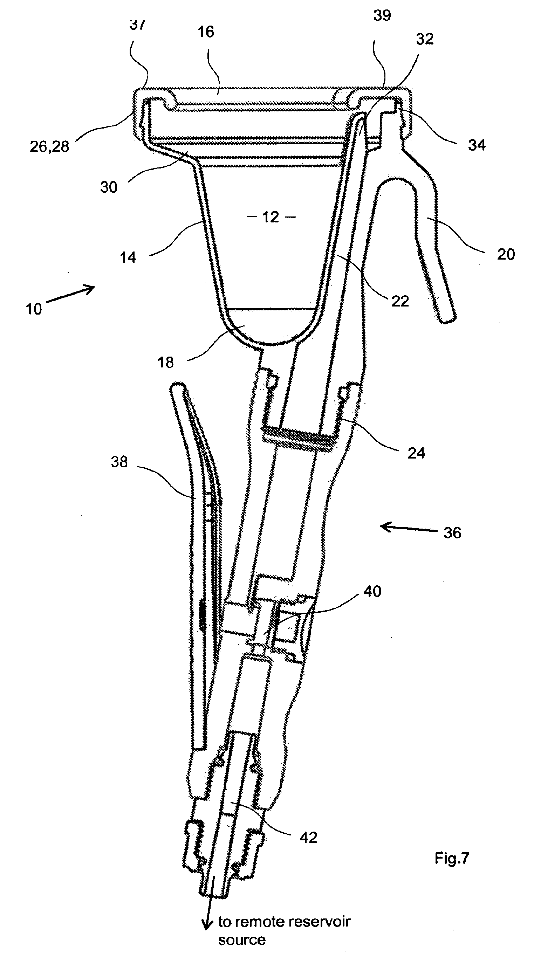

Figure 7 is a cross-sectional view along C-C of the cup portion connected to a lance as shown in Figure 6.

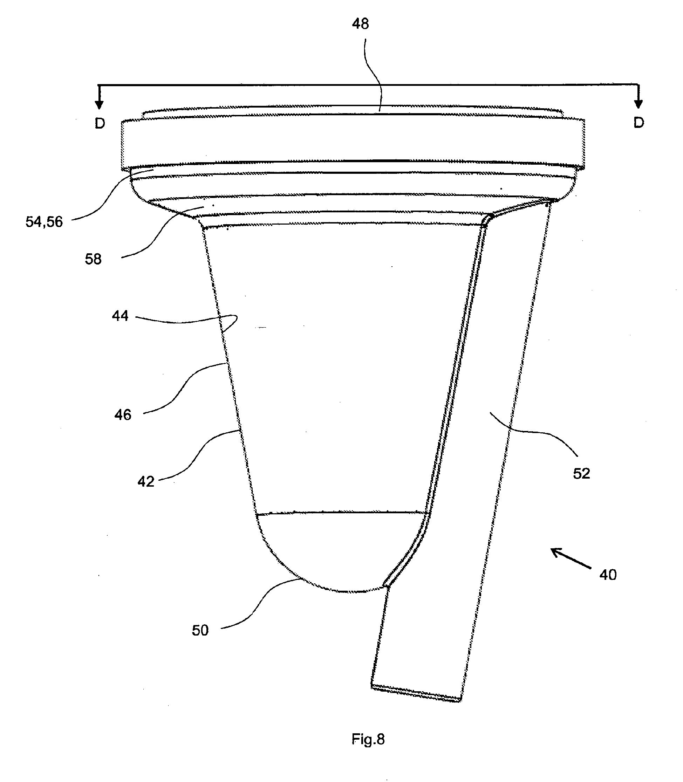

Figure 8 is a perspective view of a cup portion of another embodiment of the present invention.

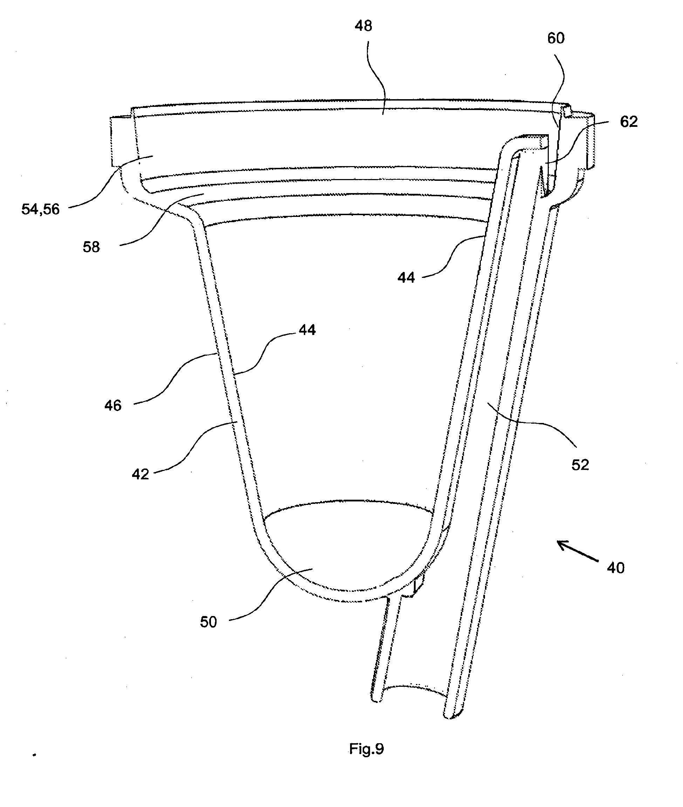

Figure 9 is a cross section view along D-D of the cup portion shown in Figure 8.

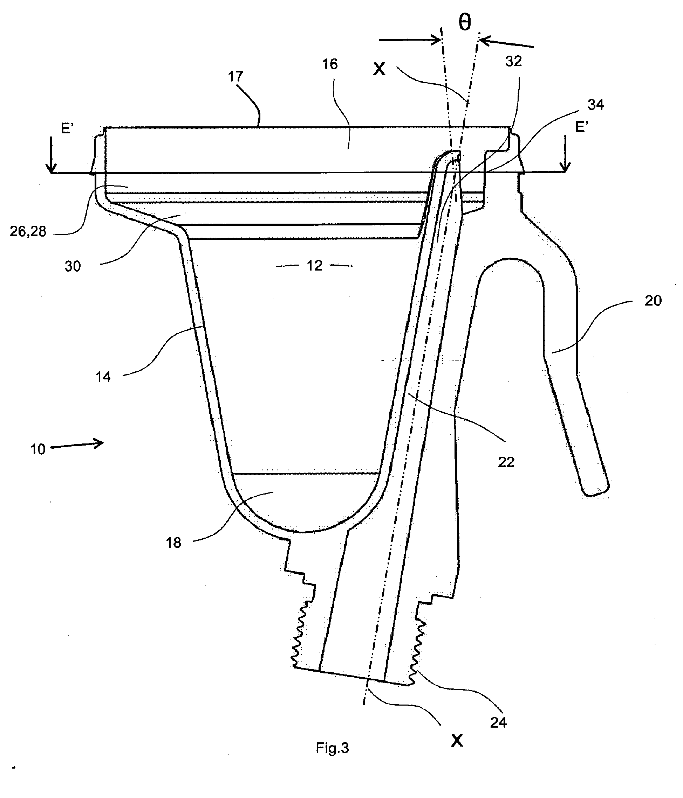

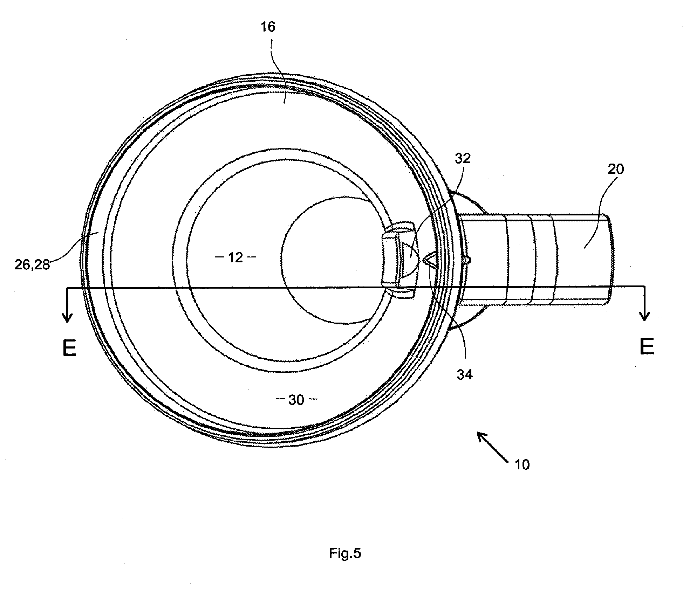

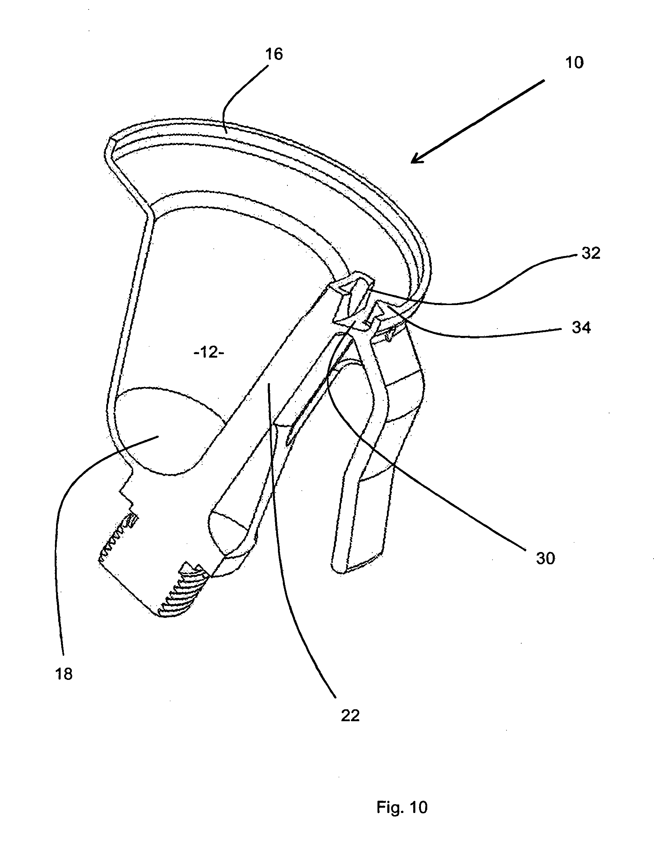

Figure 10 is a cross-section view along E-E of the cup portion shown in Figure 5, with a partial section along E'-E' of Figure 3 removed.

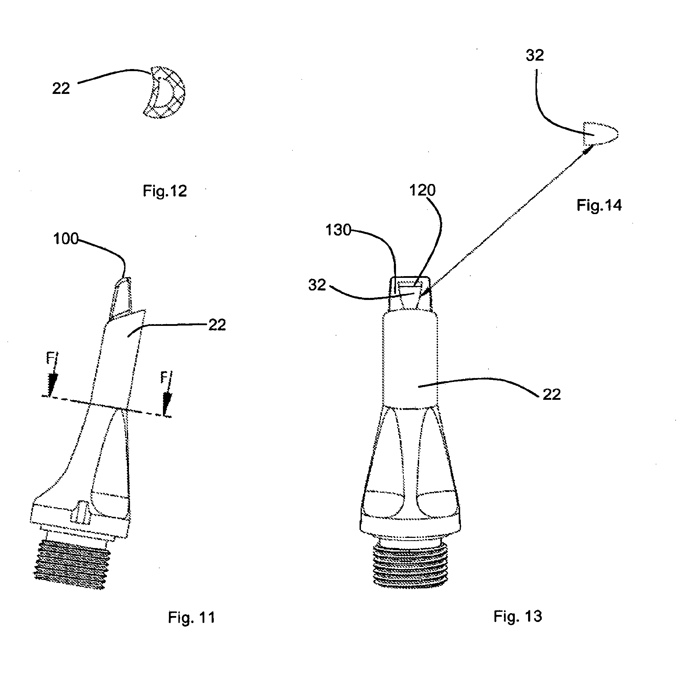

Figure 11 is a side elevation of a fluid supply conduit according to the present invention.
Figure 12 is a cross-sectional view F-F of the fluid supply conduit shown in Figure 11.
Figure 13 is the side elevation of the fluid supply conduit shown in Figure 11 but rotated 90° in a clockwise direction.
Figure 14 is a detailed view of the outlet of the fluid supply conduit shown in Figure 13.

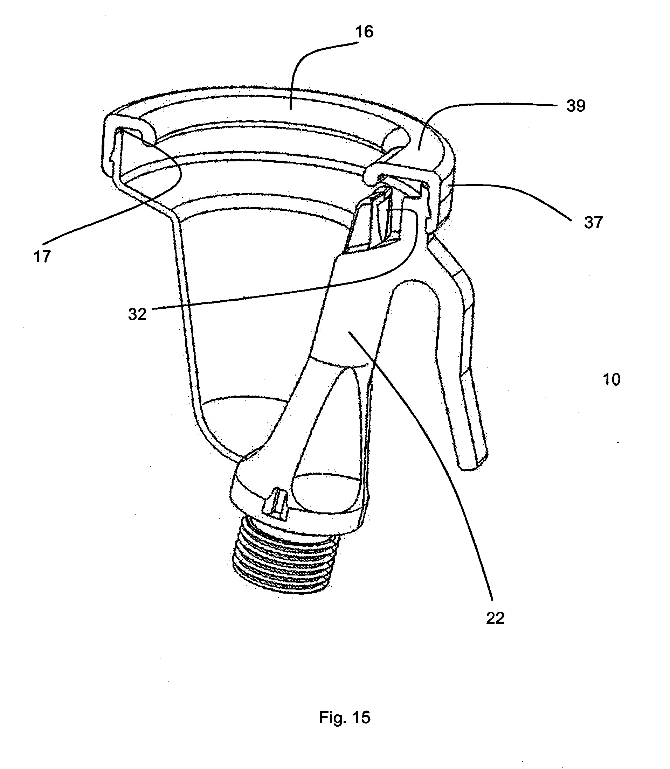

Figure 15 is a cut away view of a cup portion similar to Figure 10 except that it has a splash guard fitted to the upper open end of the cup portion.

### DETAILED DESCRIPTION

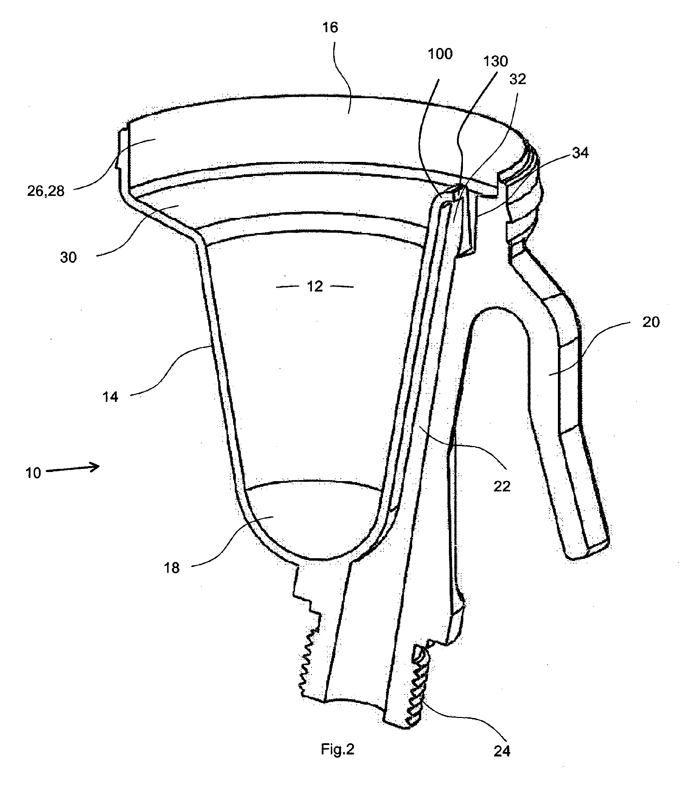

Figure 1 shows a cup portion 10 used in an application device according to the present invention that is generally cylindrical in shape and has internal 12 and external 14 surfaces, an upper open first end 16 and a lower closed second end 18. The surfaces 12 and 14 taper inwards towards the lower closed second end 18. A hook 20 is attached towards the upper open first end 16 and on the external surface 14 of the cup portion 10. A fluid supply conduit 22 is formed on and in part defined by the external surface 14; this latter feature is more clearly illustrated by Figure 2. The cup portion 10 may also be attached to either a container or a wand or lance, depending upon whether a container or a remote reservoir is being used, via a screw thread connection 24 provided in the fluid supply conduit 22. (As mentioned above, the screw thread connector may be replaced by a bayonet type or any other suitable type of fitting). The cup portion 10 has a full circumferential extension 26 that forms a wider ring-shaped portion or overflow chamber 28 which accommodates any treatment liquid that is displaced during the dip cup process thereby preventing it from overflowing out of the upper open first end 16. An inclined ledge 30 links the cup portion at the point just prior to full circumferential extension, and the start of the overflow chamber 28 formed as a result of the full circumferential extension.

The view of the cup portion shown in Figures 2 and 3 illustrate the nature of the fluid supply conduit 22. It is clear from these drawings that the fluid supply conduit 22 and the rest of the cup portion 10 are formed as a single component. Moreover it is clear that the fluid supply conduit 22 is aligned with and is defined in part by the external surface14 of the cup portion 10. The fluid supply conduit 22 has an outlet 32 located near to the upper open first end 16 of the cup portion 10. The outlet 32 has been formed by cutting the end of the fluid supply conduit 22 closest the upper open end 16, at an angle to the longitudinal axis X-X (in Figure 3) of the fluid supply conduit 22. The angle is shown as "e".

A baffle 34 is formed on the internal surface 12, adjacent the outlet 32. This is described in more detail below with the aid of Figure 5.

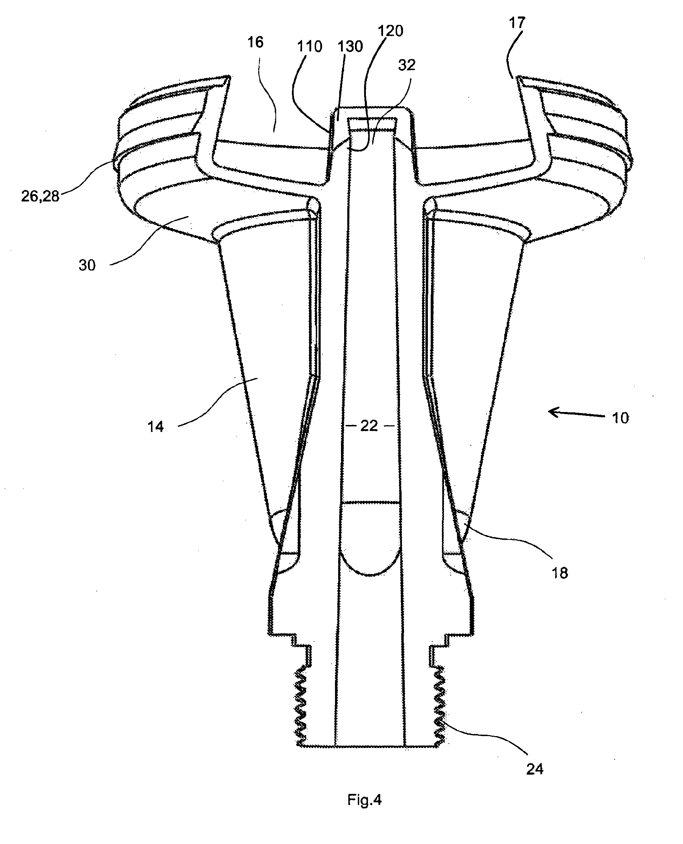

Figure 4 shows the fluid supply conduit 22 in more detail and clearly illustrates a fluid supply conduit that is moulded in the same moulding step as the formation of the rest of the cup portion.

Figure 5 shows that the baffle 34 is v-shaped to promote deflection of the treatment liquid as it exits the outlet 32 in the fluid supply conduit 22, in both a clockwise and a counter clockwise direction around the inclined ledge 30 formed on the internal surface 12 of the cup portion 10.

Figures 6 and 7 show how cup portion 10 may be connected to a wand or lance 36 via the screw thread connector 24. Figures 6 and 7 also illustrate that a splash guard 37 is fitted to the rim 17 of the upper open first end 16 of the cup portion 10. In particular, Figure 7 shows that the splash guard 37 has a flat cover portion 39 which extends inwardly of the rim 17 i.e. it overhangs partially towards the middle of the upper open first end 16, and is sufficient to overhang the outlet 32.

In use, the application device shown in Figures 6 and 7 operates as follows: the treatment liquid under pressure (either using a pump or compressed air) is introduced to the cup portion 10 by manually pressing down a hand operable lever 38 to open valve 40 and thereby to allow the treatment liquid to flow from the remote reservoir source 42 along internal channels 42 within the lance 36, along the fluid supply conduit 22, and through the outlet 32 whereupon the liquid is deflected by the baffle 34 to circulate clockwise and counter clockwise around the inclined internal ledge 30 and be allowed to drain into the cup portion 10.

Figure 8 illustrates a cup portion 40 that is designed to be received within an outer casing (not shown) and be part of a dip cup that is a two-or more part component product. In more detail: cup portion 40 has generally a conical side-wall 42 with internal 44 and external 46 surfaces, an upper open first end 48 and a lower closed second end 50. A fluid supply conduit 52 is formed on and in part defined by the external surface 46 of the conical side wall. The outer casing (not shown) has attachment means to attach the two-or more component dip cup to a fluid reservoir (also not shown). The cup portion 40 has a full circumferential extension 54 that forms a wider ring-shaped portion to provide an overflow chamber 56. The latter accommodates any treatment liquid that is displaced during the dip cup process, thereby preventing it from overflowing out of the upper open first end 48. An inclined ledge 58 links the inner cup portion at the point just prior to full circumferential extension 54, and the start of the wider ring-shaped portion or overflow chamber 56 formed as a result of the full circumferential extension 54.

The view shown in Figure 9 which is a cross-sectional view along D-D in Figure 8 more clearly illustrates the inside of the cup portion 40 and in particular how the fluid flow conduit 52 is formed on and in part defined by the external surface 46 of the conical side wall..

Figure 10 illustrates the cup portion 10 of the present invention with a top section through E'-E' in Figure 3 removed to provide a more detailed view of the cup portion 10 and the interrelationship between the outlet 32, the inclined internal ledge 30 and the baffle 34. Figure 10 also indicates the half elliptical shape of the outlet 32 formed by cutting the end of the fluid supply conduit 22 at an angle to its longitudinal axis.

Figure 11 illustrates a fluid supply conduit 22 in the absence of a cup portion 10 and Figure 12 is a cross-sectional view of the fluid supply conduit 22 along F-F in Figure 11. In this embodiment the shape of the fluid supply conduit in cross section is generally a crescent 23 (Figure 12). Figure 13 illustrates the same fluid supply conduit 22 shown in Figure 11, except that it has been rotated by 90° in a clockwise direction. The shape of the outlet 32 as viewed in Figure 13 is shown in more detail in Figure 14 to be half an ellipse 33. Comparing the cross-sectional area of the fluid supply conduit 22, that is the area of the crescent shape 23, against the cross-sectional area of the half ellipse, that is the shape of the outlet, one finds that the area of the half ellipse is much larger that the cross sectional area of the fluid supply conduit.

Figure 15 shows an application device according to the present invention with a splash guard 37 fitted and in which the cup portion 10 has been cut away to illustrate how the flat cover portion 39 extends inwardly of the rim 17 i.e. it overhangs partially towards the middle of the upper open first end 16, and is sufficient to overhang the outlet 32.

It will be appreciated from the Figures and the above description that the fluid supply conduit extends between the source of treatment liquid at a first end and, at a second end, an outlet 32 located near to the upper open first end 16 of the cup portion. For most of its length the fluid supply conduit 22 is aligned with and is defined in part by both the external surface14 and by the internal surface 12 of the cup portion 10. However, the fluid supply conduit 22 has a further end section 100 which is a continuation of the fluid supply conduit 22 and forms the second end thereof. The end section 100 is not defined by the external surface 14 but has an outer wall 110 and an inner wall 120 and is visible from the full circumferential extension 26, moreover, the upper section 100 protrudes upwards towards the upper open first end 16 of the cup portion 10 and stops at a point below the rim 17 of the cup portion 10.

The end section 100 has formed within it an outlet 32 which is formed by cutting the walls 110 and 120 of the end section 100 at an angle "e" to the longitudinal axis of the fluid supply conduit 22. Outlet 32 is therefore defined by an edge portion 130 of the inner wall 120 and said edge portion 130 is formed by the cross-sectional material of the end section 100.

## Claims

1. An application device for treating the teats of animals with a liquid, the device comprising i) a cup portion (10) having internal (12) and external (14) surfaces, an upper open first end (16) capable of receiving an animal teat and a lower closed second end (18) and ii) a fluid supply conduit (22) having an outlet (32) through which the liquid is conveyed into the cup portion (10), **characterised in that** the cross-sectional area of the outlet (32) is greater than the horizontal cross-sectional area of the fluid supply conduit (22).

2. An application device according to claim 1 wherein the fluid supply conduit flares and/or funnels out at the outlet so as to produce a cross-sectional area larger than the cross-sectional area of the fluid supply conduit.

3. An application device according to claim 1 wherein the outlet is formed in the fluid supply conduit by cutting the conduit at its end closest the upper open first end of the cup portion, at an angle relative to the longitudinal axis of the fluid supply conduit.

4. A application device according to any of claims 1 to 3 wherein the outlet in the fluid supply conduit is oriented so as to direct the treatment liquid towards the internal surface of the cup portion and generally away from the centre of the cup portion.

5. An application device for treating the teats of animals with a liquid according to any preceding claim, wherein the fluid supply conduit is defined at least in part by a portion of the external surface of the cup portion, and wherein the outlet in the fluid supply conduit is located within the cup portion and towards the upper open first end of the cup portion through which the liquid is dispensed into the cup portion.

6. An application device according to any of claims 1 to 5 further comprising a baffle device adjacent the outlet in the fluid supply conduit, which baffle device is adapted to deflect the liquid as it exits the outlet, either clockwise and/or counter-clockwise around the internal surface of the cup portion.

7. An application device according to any of claims 1 to 6 further comprising a splash guard positioned on the rim of the upper open first end of the cup portion, and comprising a cover portion which when in position on the cup portion, overhangs and projects radially inwards of the rim to partially close the upper open first end of the cup portion.

8. An application device according to claim 7 wherein the cover portion projects so as to overhang one or more sections of the rim.

9. An application device according to claim 8 wherein the cup portion is "D" shaped in plan when looking straight down on the cup portion from above.

10. An application device according to any preceding claim further comprising a reservoir source from which teat treatment liquid is supplied.

11. An application device according to claim 10 wherein the reservoir source is provided by a container connected either directly or indirectly to the lower closed second end of the cup portion.

12. An application device according to claim 10 wherein the reservoir source is remote from the cup portion and the teat treating liquid is supplied via a hand-held lance.

13. An application device according to claim 12 wherein the hand-held lance is connected to an end of the fluid supply conduit remote from the outlet therein and wherein the longitudinal axis of the lance is aligned such that it is substantially aligned with the portion of external surface of the cup portion that defines the fluid supply conduit.

14. An application device according to any preceding claim further comprising a regulator to control the rate at which the liquid exits the outlet in the fluid supply conduit.

## Patentansprüche

1. Anlegevorrichtung zum Behandeln der Zitzen von Tieren mit einer Flüssigkeit, wobei die Vorrichtung aufweist:
i) einen Becherenteil (10) mit inneren (12) und äußeren (14) Oberflächen, ein oberes offenes erstes Ende (16) zum Aufnehmen einer Tierzitze und ein unteres geschlossenes zweites Ende (18) und
ii) eine Fluidzufuhrleitung (22) mit einem Auslass (32), durch welchen die Flüssigkeit in den Becherteil (10) geleitet wird,
**dadurch gekennzeichnet, dass**
die Querschnittsfläche des Auslasses (32) größer ist, als die horizontale Querschnittsfläche der Fluidzufuhrleitung (22).

2. Anlegevorrichtung gemäß Anspruch 1, wobei sich die Fluidzufuhrleitung am Auslass aufspreizt und/oder trichterförmig erweitert, um eine Querschnittsfläche, welche größer ist als die Querschnittsfläche der Fluidzufuhrleitung zu erzeugen.

3. Anlegevorrichtung gemäß Anspruch 1, wobei der Auslass in der Fluidzufuhrleitung durch Einschneiden der Leitung in einem Winkel relativ zur Längsachse der Fluidzufuhrleitung an ihrem Ende, das dem oberen offenen ersten Ende des Becherteils am nächsten ist, ausgebildet ist.

4. Anlegevorrichtung gemäß einem der Ansprüche 1 bis 3, wobei der Auslass in der Fluidzufuhrleitung orientiert ist, um die Behandlungsflüssigkeit in Richtung der inneren Oberfläche des Becherteils und allgemein von der Mitte des Becherteils weg zu leiten.

5. Anlegevorrichtung zum Behandeln der Zitzen von Tieren mit einer Flüssigkeit gemäß einem der vorstehenden Ansprüche, wobei die Fluidzufuhrleitung zumindest teilweise durch einem Teil der äußeren Oberfläche des Becherteils ausgebildet ist,
und wobei der Auslass in der Fluidzufuhrleitung innerhalb des Becherteils und in Richtung des oberen offenen ersten Endes, durch welches die Flüssigkeit in den Becherteil abgegeben wird, angeordnet ist.

6. Anlegevorrichtung gemäß einem der Ansprüche 1 bis 5, welche ferner eine dem Auslass in der Fluidzufuhrleitung benachbarte Pralleinrichtung aufweist, wobei die Pralleinrichtung eingerichtet ist, die Flüssigkeit bei ihrem Austritt aus dem Auslass entweder in Uhrzeigersinn und/oder entgegen des Urzeigersinns um die innere Oberfläche des Becherteils abzulenken.

7. Anlegevorrichtung gemäß einem der Ansprüche 1 bis 6, welche ferner
einen an dem Rand des oberen offenen ersten Endes des Becherteils positionierter Spritzschutz,
und einen Deckelteil, welcher bei Positionierung an dem Becherteil den Rand überragt und sich von diesen radial nach innen erstreckt, um das obere offene erste Ende des Becherteils zu verschließen,
aufweist.

8. Anlegevorrichtung gemäß Anspruch 7, wobei der Deckelteil sich derart erstreckt, dass einen oder mehrere Abschnitte des Randes zu überragen.

9. Anlegevorrichtung gemäß Anspruch 8, wobei der Becherteil bei Draufsicht auf den Becherteil von oben in der Ebene "D"-förmig ausgebildet ist.

10. Anlegevorrichtung gemäß einem der vorstehenden Ansprüche, welche ferner eine Speicherquelle, von welcher eine Zitzenbehandlungsflüssigkeit zugeführt wird, aufweist.

11. Anlegevorrichtung gemäß Anspruch 10, wobei die Speicherquelle durch einen entweder direkt oder indirekt mit dem unteren geschlossenen zweiten Ende des Becherteils verbundenen Tank bereitgestellt ist.

12. Anlegevorrichtung gemäß Anspruch 10, wobei die Speicherquelle von dem Becherteil beabstandet ist und die Zitzenbehandlungsflüssigkeit über eine Handlanze zugeführt wird.

13. Anlegevorrichtung gemäß Anspruch 12, wobei die Handlanze mit einem von dem Auslass entfernten Ende der Fluidzufuhrleitung verbunden ist und
wobei die Längsachse der Lanze derart ausgerichtet ist, dass sie im Wesentlichen mit dem Teil der äußeren Oberfläche des Becherteils, welcher die Fluidzufuhrleitung definiert, ausgerichtet ist.

14. Anlegevorrichtung gemäß einem der vorstehenden Ansprüche, welche ferner einen Regulator zum Steuern/Regeln der Rate, mit welcher die Flüssigkeit aus dem Auslass der Fluidzufuhrleitung austritt, aufweist.

## Revendications

1. Dispositif d'application pour traiter les trayons des animaux avec un liquide, le dispositif comprenant i) une partie de coupelle (10) ayant des surfaces interne (12) et externe (14), une première extrémité ouverte supérieure (16) capable de recevoir un trayon d'animal et une seconde extrémité fermée inférieure (18) et ii) un conduit d'alimentation en fluide (22) ayant une sortie (32) à travers laquelle le liquide est transporté dans la partie de coupelle (10), **caractérisé en ce que** la surface transversale de la sortie (32) est supérieure à la surface transversale horizontale du conduit d'alimentation en fluide (22).

2. Dispositif d'application selon la revendication 1, dans lequel le conduit d'alimentation en fluide s'évase et/ou débouche sur la sortie afin de produire une surface transversale plus grande que la surface transversale du conduit d'alimentation en fluide.

3. Dispositif d'application selon la revendication 1, dans lequel la sortie est formée sur le conduit d'alimentation en fluide en coupant le conduit au niveau de son extrémité la plus proche de la première extrémité ouverte supérieure de la partie de coupelle, au niveau d'un angle par rapport à l'axe longitudinal du conduit d'alimentation en fluide.

4. Dispositif d'application selon l'une quelconque des revendications 1 à 3, dans lequel la sortie dans le conduit d'alimentation en fluide est orientée afin de diriger le liquide de traitement vers la surface interne de la partie de coupelle et généralement à distance du centre de la partie de coupelle.

5. Dispositif d'application pour traiter les trayons des animaux avec un liquide selon l'une quelconque des revendications précédentes, dans lequel le conduit d'alimentation en fluide est défini au moins en partie par une partie de la surface externe de la partie de coupelle, et dans lequel la sortie dans le conduit d'alimentation en fluide est positionnée à l'intérieur de la partie de coupelle et vers la première extrémité ouverte supérieure de la partie de coupelle à travers laquelle le liquide est distribué dans la partie de coupelle.

6. Dispositif d'application selon l'une quelconque des revendications 1 à 5, comprenant en outre un dispositif de déflecteur adjacent à la sortie dans le conduit d'alimentation en fluide, lequel dispositif de déflecteur est adapté pour dévier le liquide lorsqu'il sort de la sortie, dans le sens des aiguilles d'une montre et/ou dans le sens inverse des aiguilles d'une montre autour de la surface interne de la partie de coupelle.

7. Dispositif d'application selon l'une quelconque des revendications 1 à 6, comprenant en outre un pare-éclaboussures positionné sur le bord de la première extrémité ouverte supérieure de la partie de coupelle, et comprenant une partie de couvercle qui, lorsqu'elle est en position sur la partie de couvercle, est en surplomb et faisant radialement saillie vers l'intérieur du bord pour fermer partiellement la première extrémité ouverte supérieure de la partie de coupelle.

8. Dispositif d'application selon la revendication 7, dans lequel la partie de couvercle fait saillie afin d'être en surplomb sur une ou plusieurs sections du bord.

9. Dispositif d'application selon la revendication 8, dans lequel la partie de coupelle est en forme de « D » sur une vue en plan lorsque l'on regarde la partie de coupelle vers le bas, depuis le dessus.

10. Dispositif d'application selon l'une quelconque des revendications précédentes, comprenant en outre une source de réservoir à partir de laquelle le liquide de traitement de trayon est amené.

11. Dispositif d'application selon la revendication 10, dans lequel la source de réservoir est fournie par un récipient raccordé directement ou indirectement à la seconde extrémité fermée inférieure de la partie de coupelle.

12. Dispositif d'application selon la revendication 10, dans lequel la source de réservoir est à distance de la partie de coupelle et le liquide de traitement de trayon est amené via une lance manuelle.

13. Dispositif d'application selon la revendication 12, dans lequel la lance manuelle est raccordée à une extrémité du conduit d'alimentation en fluide à distance de la sortie et dans lequel l'axe longitudinal de la lance est aligné de sorte qu'il est sensiblement aligné avec la partie de la surface externe de la partie de coupelle qui définit le conduit d'alimentation en fluide.

14. Dispositif d'application selon l'une quelconque des revendications précédentes, comprenant un régulateur pour commander le débit auquel le liquide sort par la sortie dans le conduit d'alimentation en fluide.
